# EUROPÄISCHE PATENTSCHRIFT

(11) **EP 3 725 705 B1**
(45) Veröffentlichungstag und Bekanntmachung des Hinweises auf die Patenterteilung: **22.11.2023**
(21) Anmeldenummer: 20169783.6
(22) Anmeldetag: 16.04.2020
(51) Int. Cl.: B65G 1/127, B65G 29/02, B65G 65/00, B65G 47/90

(54) **BEHÄLTERWECHSELVORRICHTUNG**
CONTAINER CHANGING DEVICE
DISPOSITIF DE CHANGEMENT DE RÉCIPIENT

(30) Priorität: 17.04.2019 DE 102019110197
(43) Veröffentlichungstag der Anmeldung: 21.10.2020
(73) Patentinhaber: SMA Sächsische Maschinen- und Anlagenbau GmbH, 08056 Zwickau (DE)
(72) Erfinder: Feustel, Martin, 08485 Lengenfeld (DE)
(74) Vertreter: Schneiders & Behrendt Bochum

(56) Entgegenhaltungen:
- WO-A1-2018/162425
- DE-A1-102009 000 897
- DE-U1-202007 010 470
- GB-A- 236 262
- US-A- 1 767 525

## Beschreibung

Die Erfindung betrifft eine Behälterwechselvorrichtung mit einem Grundgestell, einer Fördereinrichtung, einer an einer Achse des Grundgestells festgelegten Schwenkeinrichtung, die zwei Schwenkarme aufweist, sowie einer Antriebseinheit mit einem Motor, der auf die Achse des Grundgestells wirkt und dazu ausgelegt ist, die Schwenkeinrichtung auf einer Kreisbahn zu verschwenken, wobei die Fördereinrichtung unterhalb der Schwenkeinrichtung angeordnet ist und die Vorrichtung eine Gondel zur Aufnahme eines Behälters aufweist, die beweglich zwischen den Schwenkarmen der Schwenkeinrichtung gelagert ist, wobei die Gondel "e eine Behältergreifvorrichtung aufweist und die Schwenkeinrichtung wenigstens ein Gegengewicht an der Gondel gegenüberliegenden Seite aufweist und die Behältergreifvorrichtung beweglich angeordnete Greiffinger aufweis Die Greiffinger sind senkrecht zur Schwenkebene der Schwenkarme beweglich und die Gondel wird von einer zwischen den Schwenkarmen um die Längsachse drehbaren Halterung gebildet.

Behälterwechselvorrichtungen sind an und für sich bekannt. In der Regel weisen sie eine Greifvorrichtung für die jeweiligen Behälter auf, die vertikal und horizontal verfahrbar ist. Die Behälter selbst befinden sich unterhalb der Greifvorrichtung und können in die eine oder andere Richtung bewegt werden. Die Greifvorrichtung ist in der Lage, den darunter befindlichen Behälter zu greifen, anzuheben und in eine Position vor oder hinter einem anderen Behälter zu verfahren. Aufbau und Steuerung solcher Vorrichtungen sind aufwendig, der Platzbedarf nicht unerheblich. Insbesondere in Fabrikationsanlagen mit begrenztem Platzangebot, bei denen Teile in Behältern zum Einbau angeliefert werden, ist eine solche Behälterwechselvorrichtung häufig nicht mehr unterzubringen.

Eine Behälterwechselvorrichtung gemäß Oberbegriff des Anspruchs 1 ist aus der DE 20 2007 010 470 111 bekannt.

Angesichts dessen ist es Aufgabe der Erfindung, einen Behälterwechselvorgang zwischen einer Behälterbeschickungsseite und einer Bauteilentnahmeseite platzsparend durchzuführen. Die Behälterwechselvorrichtung soll eine möglichst kleine Aufstellfläche in Anspruch nehmen, wobei die Breite der Vorrichtung ein kleineres Maß als die zweifache Behälterbreite aufweisen sollte.

Für den reibungslosen Betrieb von Fabrikationsanlagen, insbesondere von Montagebändern, ist es notwendig, dass Bauteile aus dem Behälter auf der Bauteilentnahmeseite permanent entnommen werden können. Der Austausch leerer gegen volle Behälter ist deshalb kritisch. Ein Austausch sollte deshalb unmittelbar nach Anforderung eines neuen Behälters erfolgen.

Beim Austausch eines leeren Behälters gegen einen vollen Behälter ist es notwendig, zunächst den vollen Behälter aufzunehmen und zum Antransport bereitzustellen. In der Regel ist es dazu erforderlich, den vollen Behälter über einen leeren Behälter, der sich auf der Entnahmeseite befindet, hinweg zu heben. Anschließend muss der leere Behälter abgefahren werden, bevor der volle Behälter in die Teileentnahmeposition verbracht werden kann.

Die erfindungsgemäße Vorrichtung ist platzsparend, dergestalt, dass sie wenig mehr Raum einnimmt als eine Behälterbreite und eine Behälterlänge. Dadurch, dass sie in der Lage ist, die Behälter auf einer Kreisbahn zu verschwenken, nutzt sie den oberhalb der Behälter vorhandenen Raum für den Austausch. Dies macht die Vorrichtung kompakt und führt zu einem einfachen konstruktiven Aufbau.

Die erfindungsgemäße Behälterwechselvorrichtung verfügt über ein Grundgestell, das über einer Förderereinrichtung zum Transport der Behälter angeordnet ist. Das Grundgestell weist eine Achse auf, an der zwei Schwenkarme gelagert sind. Die Schwenkarme sind an den seitlichen Enden der Achse festgelegt. Die Achse befindet sich in einer Ebene oberhalb der auf der Fördereinrichtung abgestellten Behälter.

Die Behälterwechselvorrichtung weist eine Antriebseinheit mit einem Motor auf, der auf die Achse des Grundgestells wirkt und dazu ausgelegt ist, die Schwenkeinrichtung auf einer Kreisbahn zu verschwenken. Insbesondere ist der Motor dazu ausgelegt, die Schwenkeinrichtung zwischen einer unteren Aufnahmeposition, einer oberen Parkposition und einer unteren Abstellposition zu bewegen.

Für die Aufnahme der Behälter weist die Schwenkeinrichtung eine Gondel auf, die beweglich an den Schwenkarmen der Schwenkeinrichtung gelagert sind. Die Gondel ist mit einer Greifvorrichtung für Behälter ausgestattet, die steuerbar Behälter ergreifen und freigeben kann. Da die Gondel beweglich an dem oder den Schwenkarmen angeordnet ist, behält der Behälter seine ursprüngliche aufrechte Lage während der Schwenkbewegung bei.

Die Schwenkarme sind insbesondere an der der Gondel gegenüberliegenden Seite mit Gegengewichten versehen, um den Transport von insbesondere vollen Behältern zu erleichtern und die Belastung des oder der Schwenkarme zu vermindern. Dabei kann jeder Schwenkarm ein Gegengewicht aufweisen, jedoch auch ein einzelnes Gegengewicht zwischen den Gondeln angeordnet sein.

Die Behältergreifvorrichtung der Gondel ist mit beweglichen Greiffingern ausgestattet.

Vorzugsweise weist die Behältergreifvorrichtung im Bereich eines jeden Schwenkarms mehrere, insbesondere zwei zueinander beabstandete Greiffinger auf. Dies erlaubt es, einen Behälter sicher zu ergreifen und festzuhalten, wobei der Tatsache Rechnung getragen wird, dass Bauteilbehälter in der Regel auf Paletten angeliefert und gelagert werden.

Erfindungsgemäß sind die Greiffinger der Behältergreiftvorrichtung senkrecht zur Schwingebene der Schwenkarme beweglich. Damit können die Greiffinger unter einen Bauteilbehälter ein- und ausgeschwenkt werden. Dieser Schwenkmechanismus kann über ein herkömmlichen Motor gesteuert werden.

Die Gondel wird von einer zwischen den Schwenkarmen um ihre Längsachse drehbaren Halterung gebildet. Die an der Gondel an deren Längsseiten angeordneten Greiffinger bewirken, dass sich die Gondel unabhängig von der Schwenkposition immer so ausrichtet, dass die Greiffinger nach unten ausgerichtet sind. Die Greiffinger sind dabei um eine Achse senkrecht zur Halterung beweglich gelagert. Die Greiffinger sind dazu gewinkelt ausgeführt, wobei ein senkrecht verlaufender Teil dazu bestimmt ist, den Behälter zu ergreifen und ein in etwa einem rechten Winkel dazu verlaufender freier Schenkel an der Halterung gelagert ist und dazu bestimmt ist, die Steuerung zu übernehmen.

Zur Steuerung sind die freien Schenkel der Greiffinger auf einer Seite der Halterung beweglich miteinander so verbunden, dass sie über einen Motor synchron zu den Greiffingern auf der anderen Seite der Halterung bewegt werden können. Die freien Schenkel sind durch diesen Motor zwischen einer unteren und einer oberen Position beweglich. Aufgrund der Winkelstruktur der Greiffinger bedeutet dies, dass in der oberen Position der freien Schenkel die Greiffinger einen Behälter ergreifen können und in der unteren Position diesen Behälter wieder freigeben. Die Festlegung der Greiffinger an der Halterung erfolgt vorzugsweise an den freien Schenkeln in unmittelbarer Nähe der Abwicklung.

Um die freien Schenkel in eine untere und eine obere Position bewegen zu können, weisen sie am Ende einander überlappende Langlöcher auf, in die ein Stift eingreift. Dieser Stift, der exzentrisch an einer motorgetriebenen Scheibe angeordnet ist, stellt die Kopplung der Greiffinger her und sorgt für die Verlagerung der freien Schenkel in die obere Position zur Aufnahme eines Behälters und zurück in die untere Position zur Freigabe des Behälters.

Es versteht sich, dass beidseitig der Halterung motorgetriebene Scheiben die Bewegung und Steuerung der Behältergreifvorrichtung bewirken. Die Scheiben sind durch eine durch die Halterung hindurchreichende Achse miteinander und mit dem Motor verbunden. Diese Anordnung hat den Vorteil, dass der Motor für die einzelnen Schritte (Aufnahme des Behälters/Absetzen des Behälters) jeweils nur eine halbe Umdrehung der Scheibe in ein und dieselbe Richtung vornehmen muss; durch die Langlöcher an den freien Enden der Schenkel besteht hinreichender Bewegungsspielraum.

Die erfindungsgemäße Behälterwechselvorrichtung verfügt über einen Antrieb, der auf die Achse der Schwenkeinrichtung wirkt. Dies kann beispielsweise über einen üblichen Zahnriemen-, Ketten- oder Keilriemenantrieb erfolgen.

Es versteht sich, dass die erfindungsgemäße Behälterwechselvorrichtung über notwendige und übliche Steuerungen verfügt, die einen automatischen oder halbautomatischen Betrieb ermöglichen. So kann beispielsweise die Anlieferung eines neuen vollen Behälters über eine Lichtschranke signalisiert werden, worauf die Vorrichtung den Austausch eines leeren gegen den neuen vollen Behälter vor sich nimmt.

Die Erfindung wird durch die beiliegenden Abbildungen näher erläutert. Es zeigen:
- Figur 1: eine nicht erfindungsgemäße Behälterwechselvorrichtung im Detail;
- Figur 2: die Vorrichtung von Figur 1 mit eingeschwenkten Greiffingern;
- Figur 3: die Vorrichtung von Figur 1 bei der Aufnahme eines Behälters;
- Figur 4: die Vorrichtung von Figur 1 mit einem in eine obere Position verschwenkten Behälter;
- Figur 5: die Vorrichtung von Figur 1 beim Absetzen eines Behälters auf der Beschickungsseite;
- Figur 6: eine erfindungsgemäßen Behälterwechselvorrichtung;
- Figur 7: eine Ansicht der Gondel mit freigegebenen Behälter;
- Figur 8: eine Ansicht der Gondel mit festgehaltenen Behälter; und
- Figur 9: eine Detailansicht der Gondel mit dem Antrieb der Greiffinger.

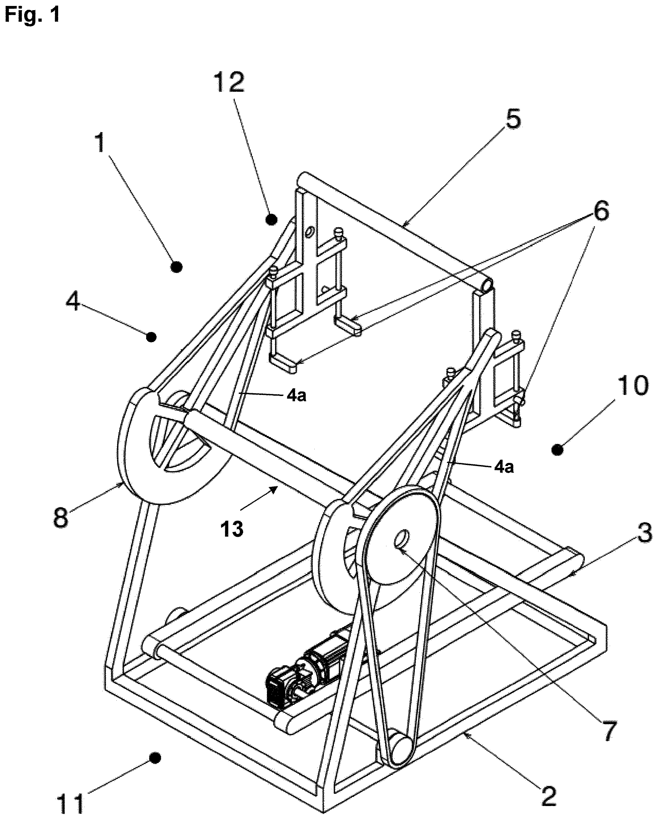

Die darstellungen in den Abbildungen 1 bis 5 erläutern die Behälterwechselvorrichtung, sind aber nicht erfindungsgemäß.

Die Behälterwechselvorrichtung 1 von Figur 1 weist ein Grundgestell 2 auf, dass aus einem auf dem Boden aufliegenden Rahmen besteht sowie aus an den Seiten aufragenden Streben, die jeweils ein Dreieck ausbilden und an denen die Achse 13 für die Schwenkeinrichtung 4 gelagert ist. Zwischen dem Rahmen des Grundgestells befindet sich ein Motor, der über eine Antriebswelle und einen Keilriemen auf das Antriebsrad 7 der Achse 13 wirkt. Oberhalb des Rahmens des Grundgestells befindet sich die Fördereinrichtung 3 zum An- und Abtransport von Behältern.

An der Achse 13 angeordnet befindet sich die Schwenkeinrichtung 4, die an ihrem auskragenden Ende eine Gondel 5 mit einer Behältergreifvorrichtung 6 aufweist. Die Gondel 5 ist beweglich gelagert, sodass der damit transportierte Behälter immer seine aufrechte Position beibehält.

An der der Gondel 5 gegenüberliegenden Seite der Schwenkarme 4a befinden sich zwei Gegengewichte 8, die den Antrieb der Gondel 5 entlasten.

Die Bezugszeichen 10, 11 und 12 bezeichnen die Bauteilentnahmeseite der Vorrichtung, die Behälterbeschickungsseite und die Warteposition.

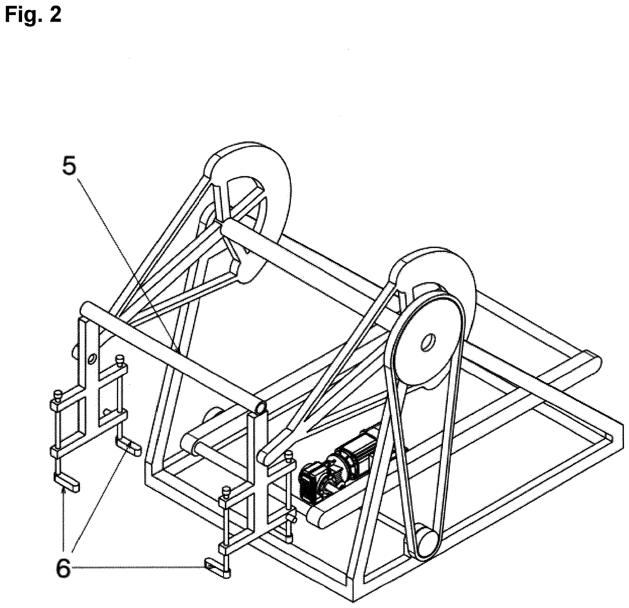

Figur 2 zeigt die Behälterwechselvorrichtung aus einer anderen Perspektive mit eingeschwenkten Greiffingern 6a, also in einer Position, die zur Aufnahme eines Behälters dient. Die entsprechende Abbildung Figur 1 zeigt die Greiffinger ebenfalls in ausgefahrener Position, wie sie bei Transport eines Behälters vorgesehen ist.

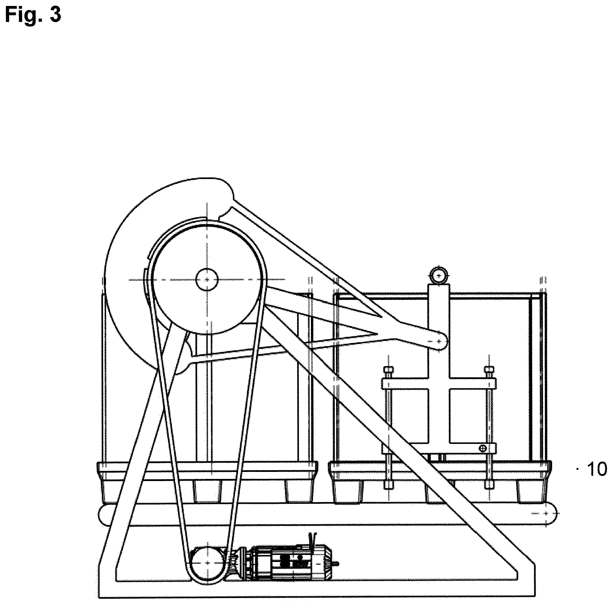

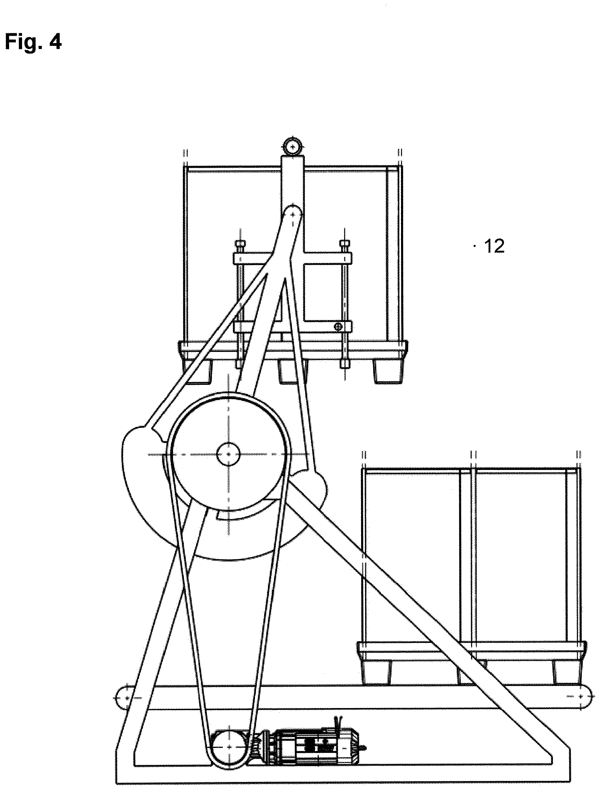

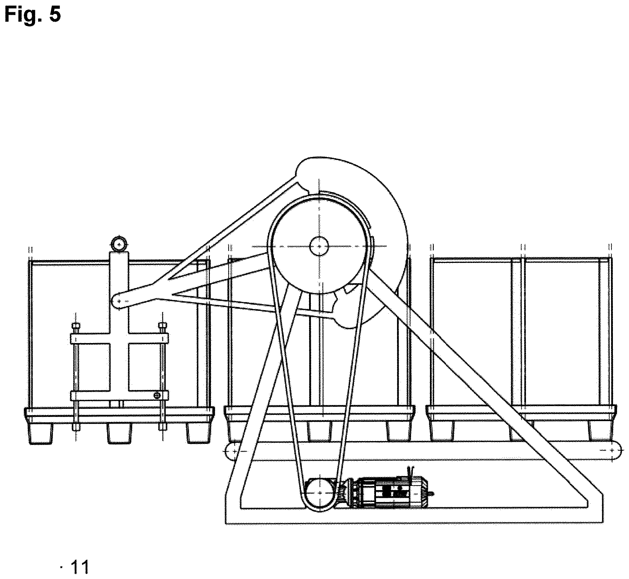

Figur 3 zeigt die Behälterwechselvorrichtung bei der Aufnahme eines leeren Behälters auf der Bauteilentnahmeseite 10. Der Behälter wird in eine Warteposition 12 angehoben, wie in Figur 4 dargestellt, während ein voller Behälter in die Bauteilentnahmeposition 10 verfahren wird. Figur 5 zeigt das Absetzen des leeren Behälters auf der Behälterbeschickungsseite 11. Die freigewordene Position auf dem Förderband wurde zwischenzeitlich von einem neuen Behälter eingenommen.

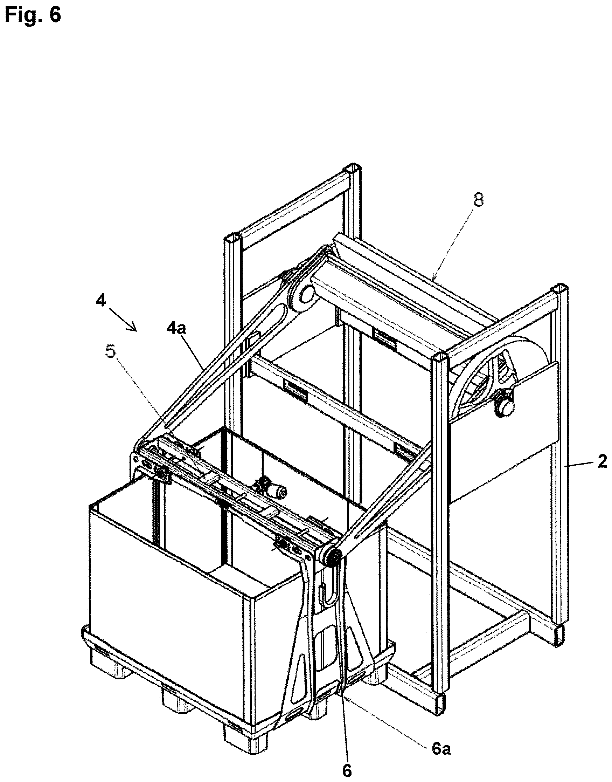

Figur 6 beschreibt eine erfindungsgemäßen Behälterwechselvorrichtung mit einem Grundgestell 2 und einer Schwenkeinrichtung 4. Die Antriebseinheit ist der Einfachheit halber nicht dargestellt. Die Gondel 5 besteht aus der Halterung 14 und den Greiffingern 6a, die zusammen mit dem Motor 16 die Behältergreifvorrichtung 6 bilden. An dem der Gondel 5 abgewandten Ende der Schwenkeinrichtung 4 befindet sich ein Gegengewicht 8 in Form eines Metallbalkens. Dargestellt ist auch ein auf einer Palette gelagerter Behälter 9, der von den Greiffingern 6a gehalten wird.

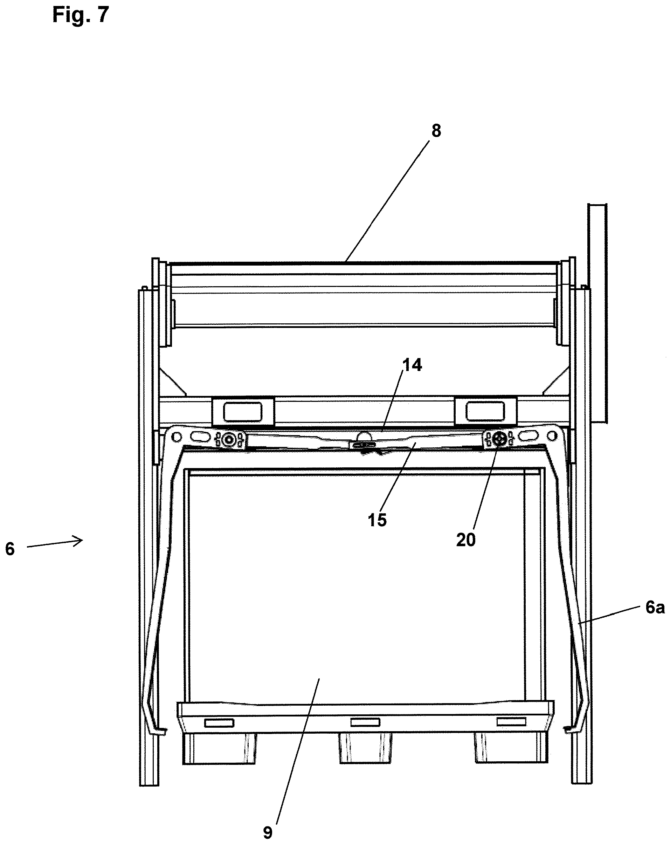

Figur 7 zeigt die Vorrichtung von Figur 6 frontal mit der Behältergreifvorrichtung 6. Zu erkennen ist, dass die Greiffinger 6a aus einem nach unten ragenden Teil und einem abgewinkelten freien Schenkel 15 bestehen und auf jeder Seite paarweise angeordnet sind. Die freien Schenkel 15 reichen bis etwa in die Mitte der Halterung 14. Die freien Schenkel 15 sind bei 20 beweglich an der Halterung 14 gelagert. Zu erkennen ist ferner eine Scheibe 17, mit der sich die Greiffinger 6a über die Schenkel 15 an den Angelpunkten 20 bewegen lassen. Die dargestellte Position der Greiffinger 6a zeigt den Behälter 9 in freigegebene Position.

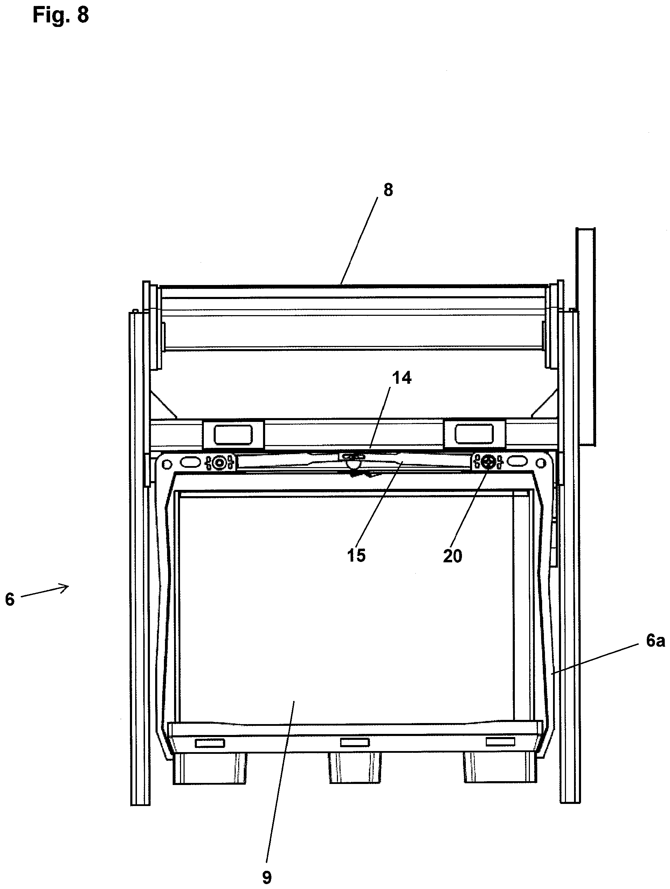

Figur 8 zeigt die Vorrichtung von Figur 7 mit von den Greiffingern 6a ergriffenem Behälter 9. Die freien Schenkel 15 der Greiffinger 6a befinden sich an der Halterung 14 in einer oberen Position, die Greiffinger 6a sind an den Angelpunkten 20 unter den Behälter 9 gedreht.

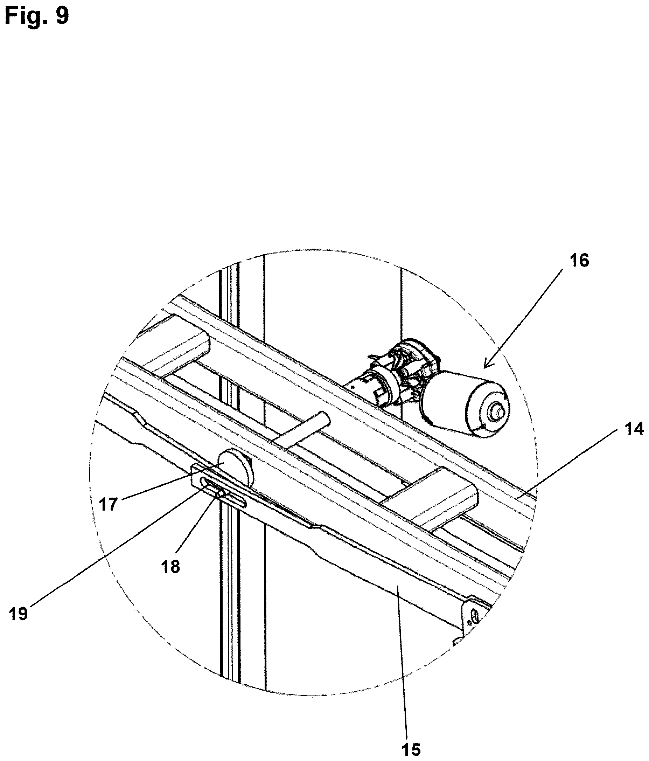

Figur 9 zeigt den Antriebsmechanismus für die Greiffinger 6a im Detail. Ein Motor 16 treibt über eine zentrale Achse die Scheibe 17 an, die exzentrisch einen Stift 18 aufweist. Dieser Stift 18 greift in Langlöchern 19 am Ende des freien Schenkels 15 eines jeden Greiffingers 6a ein. Eine entsprechende Scheibe 17 mit exzentrischem Stift 18 befindet sich auf der verdeckten Seite der Halterung 14.

Bei Betätigung des Modus wird die Scheibe 17 um 180° gedreht, was die Verschwenkung der freien Schenkel 15 in eine obere Position bewirkt. Die Ausbildung eines Langlochs 19 am Ende des freien Schenkels 15 und die Kopplung der beiden auf der gleichen Seite der Halterung 14 liegenden freien Schenkel 15 über den Stift in diesen Langlöchern gibt die nötigen Freiheitsgrade für die Bewegung des Stifts 18. In der dargestellten unteren Position geben die Greiffinger 6a den Behälter 9 frei. Wird der Stift 18 in die obere Position gedreht, werden die Schenkel 15 angehoben und die Greiffinger 6a werden unter den Behälter 9 gefahren.

## Patentansprüche

1. Behälterwechselvorrichtung mit einem Grundgestell (2), einer Fördereinrichtung (3), einer an einer Achse (13) des Grundgestells (2) festgelegten Schwenkeinrichtung (4), mit zwei Schwenkarmen (4a), sowie einer Antriebseinheit (7) mit einem Motor, der auf die Achse (13) des Grundgestells (2) wirkt und dazu ausgelegt ist, die Schwenkeinrichtung (4) auf einer Kreisbahn zu verschwenken, wobei die Fördereinrichtung (3) unterhalb der Schwenkeinrichtung (4) angeordnet ist und die Vorrichtung eine Gondel (5) zur Aufnahme eines Behälters aufweist, die beweglich zwischen den Schwenkarmen (4a) der Schwenkeinrichtung (4) gelagert ist, wobei die Gondel (5) eine Behältergreifvorrichtung (6) aufweist und die Schwenkeinrichtung (4) wenigstens ein Gegengewicht (8) an der der Gondel (5) gegenüberliegenden Seite aufweist und die Behältergreifvorrichtung (6) beweglich angeordnete Greiffinger (6a) aufweist, wobei die Greiffinger (6a) senkrecht zur Schwenkebene der Schwenkarme beweglich sind, die Gondel (5) von einer zwischen den Schwenkarmen um die Längsachse drehbaren Halterung (14) gebildet wird, **dadurch gekennzeichnet, dass**
an den beiden Längsseiten der Halterung (14) die Greiffinger (6a) gewinkelt ausgeführt und über ihren abgewinkelten freien Schenkel (15) an der Halterung (14) um eine Achse senkrecht zur Halterung (14) beweglich gelagert sind, wobei die freien Schenkel (15) der auf einer Seite der Halterung (14) angeordneten Greiffinger (6a) beweglich miteinander verbunden sind und über einen Motor (16) synchron über einen exzentrisch an einer beweglichen Scheibe (17) angeordneten Stift (18) zwischen einer unteren und einer oberen Position beweglich sind, wobei der Stift (18) in einander überlappende Langlöcher (19) am Ende der freien Schenkel (15) der Greiffinger (6a) eingreift.

2. Behälterwechselvorrichtung nach Anspruch 1, **dadurch gekennzeichnet, dass** der Motor über einen Keilriemen, Zahnriemen oder eine Kette auf die Achse (13) des Grundgestells (2) wirkt.

3. Behälterwechselvorrichtung nach Anspruch 1 oder 2, **dadurch gekennzeichnet, dass** die Schwenkarme (4a) seitlich oberhalb der Fördereinrichtung (3) an der Achse (13) angeordnet sind.

4. Behälterwechselvorrichtung nach Anspruch 3, **dadurch gekennzeichnet, dass** jeder Schwenkarm (4a) an seinem der Gondel (5) gegenüberliegenden Ende ein Gegengewicht (8) aufweist.

5. Behälterwechselvorrichtung nach Anspruch 1, **dadurch gekennzeichnet, dass** die Behältergreifvorrichtung (6) im Bereich der Schwenkarme jeweils mehrere Greiffinger (6a) aufweist.

6. Behälterwechselvorrichtung nach einem der vorstehenden Ansprüche, **gekennzeichnet durch** eine Steuervorrichtung für den automatischen oder halbautomatischen Betrieb.

## Claims

1. Container changing device with a base frame (2), a conveying device (3), a swivel device (4) fixed to an axis (13) of the base frame (2), with two swivel arms (4a), as well as a drive unit (7) with a motor which acts on the axis (13) of the base frame (2) and is designed to swivel the swivel device (4) on a circular path, wherein the conveying device (3) is arranged below the swivel device (4) and the device comprises a gondola (5) for receiving a container, which is movably mounted between the swivel arms (4a) of the swivel device (4), wherein the gondola (5) comprises a container gripping device (6) and the swivel device (4) comprises at least one counterweight (8) on the side opposite the gondola (5) and the container gripping device (6) comprises movably arranged gripping fingers (6a), wherein the gripping fingers (6a) are movable perpendicularly to the pivoting plane of the swivel arms, the gondola (5) being formed by a holder (14) rotatable about the longitudinal axis between the swivel arms,
**characterized in that**
at the two long sides of the holder (14) the gripping fingers (6a) are angled and are mounted via their angled free leg (15) on the holder (14) so as to be movable about an axis perpendicular to the holder (14), the free legs (15) of the gripping fingers (6a) arranged on one side of the holder (14) are movably connected to each other and move synchronously between a lower and an upper position by means of a motor (16) via a pin (18) arranged eccentrically on a movable disc (17), wherein the pin (18) engages in mutually overlapping elongated holes (19) at the end of the free legs (15) of the gripping fingers (6a).

2. Container changing device according to claim 1, **characterized in that** the motor acts on the axis (13) of the base frame (2) via a V-belt, toothed belt or chain.

3. Container changing device according to claim 1 or 2, **characterized in that** the swivel arms (4a) are arranged laterally above the conveying device (3) at the axis (13).

4. Container changing device according to claim 3, **characterized in that** each swivel arm (4a) has a counterweight (8) at its end opposite the gondola (5).

5. Container changing device according to claim 1, **characterized in that** the container gripping device (6) has several gripping fingers (6a) in each case in the region of the swivel arms.

6. Container changing device according to any of the preceding claims, **characterized by** a control device for automatic or semi-automatic operation.

## Revendications

1. Dispositif de changement de récipient comprenant un châssis de base (2), un dispositif de transport (3), un dispositif de pivotement (4) fixé sur un axe (13) du châssis de base (2), avec deux bras pivotant (4a), ainsi qu'une unité d'entraînement (7) avec un moteur qui agit sur l'axe (13) du châssis de base (2) et qui est conçu pour faire pivoter le dispositif de pivotement (4) sur une trajectoire circulaire, le dispositif de transport (3) étant disposé en dessous du dispositif de pivotement (4) et le dispositif présentant une nacelle (5) destinée à recevoir un récipient, qui est montée mobile entre les bras pivotant (4a) du dispositif de pivotement (4), la nacelle (5) présentant un dispositif de préhension de récipient (6) et le dispositif de pivotement (4) présentant au moins un contrepoids (8) sur le côté opposé à la nacelle (5) et le dispositif de préhension de récipient (6) présentant des doigts de préhension (6a) disposés mobiles, les doigts de préhension (6a) sont mobiles perpendiculairement au plan de pivotement des bras pivotants, la nacelle (5) est formée par un support (14) pouvant tourner autour de l'axe longitudinal entre les bras pivotants,
**caractérisé en ce que**
sur les deux côtés longs du support (14) les doigts de préhension (6a) sont coudés et par l'intermédiaire de leur branche libre (15) coudée sont montés sur le support (14) de manière à pouvoir se déplacer autour d'un axe perpendiculaire au support (14), les branches libres (15) des doigts de préhension (6a) disposés sur un côté du support (14) sont reliées entre elles de manière mobile et sont mobiles entre une position inférieure et une position supérieure par l'intermédiaire d'un moteur (16) de manière synchrone par l'intermédiaire d'une broche (18) disposée de manière excentrée sur un disque mobile (17), la broche (18) s'engageant dans des trous oblongs (19) se chevauchant à l'extrémité des branches libres (15) des doigts de préhension (6a).

2. Dispositif de changement de récipient selon la revendication 1, **caractérisé en ce que** le moteur agit sur l'axe (13) du châssis de base (2) par l'intermédiaire d'une courroie trapézoïdale, d'une courroie dentée ou d'une chaîne.

3. Dispositif de changement de récipient selon la revendication 1 ou 2, **caractérisé en ce que** les bras pivotants (4a) sont disposés latéralement au-dessus du dispositif de transport (3) sur l'axe (13).

4. Dispositif de changement de récipient selon la revendication 3, **caractérisé en ce que** chaque bras pivotant (4a) présente un contrepoids (8) à son extrémité opposée à la nacelle (5).

5. Dispositif de changement de récipient selon la revendication 1, **caractérisé en ce que** le dispositif de préhension de récipient (6) présente respectivement plusieurs doigts de préhension (6a) dans la zone des bras pivotants.

6. Dispositif de changement de récipient selon l'une des revendications précédentes, **caractérisé par** un dispositif de commande pour le fonctionnement automatique ou semi-automatique.
